Europäisches Patentamt

European Patent Office

Office européen des brevets

(11) Publication number: **0 145 437**
A2

# EUROPEAN PATENT APPLICATION

(21) Application number: **84308391.6**

(22) Date of filing: **04.12.84**

(51) Int. Cl.⁴: **H 04 M 9/02, H 04 L 11/16**

(30) Priority: **09.12.83 GB 8332926**

(43) Date of publication of application: **19.06.85 Bulletin 85/25**

(84) Designated Contracting States: **DE FR GB NL SE**

(71) Applicant: **EMI Limited, Blyth Road, Hayes Middlesex, UB3 1BP (GB)**

(72) Inventor: **Bates, Stephen Ronald, 25, Willow Avenue, High Wycombe Buckinghamshire (GB)**
Inventor: **Waltham, Richard Miller, 65a, Lavington Road, West Ealing London, W13 9LR (GB)**

(74) Representative: **Marsh, Robin Geoffrey, Thorn EMI Patents Limited The Quadrangle Westmount Centre Uxbridge Road, Hayes Middlesex, UB4 0HB (GB)**

(54) Information transmission network.

(57) A network for voice and/or data transmission has a coaxial wire forming a multi-channel transmission line 1 to which are connected a number of separate stations 2, each incorporating a telephone 3 enabling a user to link with that of another station as required. Each station also has a channel scanner 4 to determine whether a signal is being transmitted on each available channel, a monitor 5 to inspect any detected signals for codes identifying the intended recipient station(s) and a transmitting section 6 to send out a signal with a code identifying the intended recipient. The available channels are split up into predetermined pairs for simultaneous connection between stations to enable two-way conversation.

: 1 :

INFORMATION TRANSMISSION NETWORK

The present invention relates to an information transmission network and to a station for such a network.

There have been some recent proposals to connect together specified users of computers (or other information processors) in localised networks to enable the sharing of facilities such as a large data base and to facilitate communication between the users. In one commercial form of such a Local Area Network (known generally as LAN), the users are linked by a transmission line operating on a 10 Megaherz baseband channel. A signal which is to be transmitted within the network is time multiplexed and then sent along the line without insertion into dedicated time slots. Thus, upon arrival at its destination the signal may have been randomly split into sections with intervening pauses which can exceed 30 ms in duration. These pauses have no effect on the data reception equipment which is able to ignore all the portions which carry no information. However pauses of such duration in speech would be intolerable and confusing to a listener, thereby precluding use of such a network for the transmission of speech.

British Patent Application Publication No.GB.2112606A discloses a distributed telephone system in which a number of telephones communicate with one another over a common line using a number of pairs of frequency-multiplexed channels. When a call is to be made, the relevant telephone searches for the absence of a carrier frequency on a channel, puts an alert signal on the line in order to activate the other telephones which are all in a quiescent state, and then transmits a carrier frequency signal. In this way the normally-quiescent telephones are instructed that a new call is coming onto the line so that they can begin searching for an unanswered call.

An object of the present invention is to provide an information transmission network suited for the transmission of voice and/or data along a wideband communications system. Another object of the present invention is to provide an information transmission network with a minimum of central control, optionally with no central control at all. Another object of the present invention is to provide an information transmission network which can readily be adapted in order to provide additional facilities. Another object of the present invention is to provide an information transmission network which enables a station to be connected quickly to another station when transfer of information between those two stations is required.

The present invention provides an information transmission network having a plurality of stations connected by a transmission link to provide a plurality of separate channels for the routing of signals between the stations, along which transmission link, are passed, in use, signals with an identification code indicating the intended recipient(s), each station having means for regular automatic searching, throughout operation of the network, over a number of channels to determine if a signal exists in any of the channels.

The results of the searching operation can be used to locate a free pair of channels in the network in order that the station can then effect a connection with one or more stations. Additionally or alternatively the results of the searching operation can be used to locate any channel which is busy so that the signal of any such channel can be checked to determine whether it is intended for the station.

The present invention also provides a station for an information transmission network comprising means for regular automatic searching over a number of channels to determine if a signal exists in any of the channels, and means for monitoring

0145437

any signal found by the searching means for an identification code indicating the intended recipient(s) and/or the source.

Thus a network of the present invention incorporates regular monitoring of the condition of all the channels; also all those stations, which are not actually transferring information at any given time, are in a mode ready for initiating the operation to set up a connection between stations. Accordingly this network can readily provide a fast response and obviates the need for any signal to alert stations from a quiescent state.

One or more stations may have means for continuous (rather than merely regular) automatic searching over a number of channels, either throughout operation of the network or only when the station(s) have no established connection with another station.

Preferably the network and/or one or more stations has means to store information on the status of one or more channels derived from searching through the channels.

As the transmission link provides a number of separate channels between the stations, at any one instant more than one set of signals may be in the process of being transmitted between stations. The channelling of signals may be achieved by frequency division multiplexing, or by space multiplexing (e.g. by providing a bundle of separate transmission lines) or by time multiplexing, or by a suitable combination of any of these methods.

Preferably a station has means to transmit information from two sources simultaneously and/or means to transit information on two (or more) channels simultaneously. In one form, the transmission means and reception means can each operate in both amplitude-modulation and frequency-modulation modes thereby enabling one channel to be modulated with information from two sources; in another form the station has two separate transmitters and two separate receivers, to allow simultaneous operation of two channels by one station.

Preferably, all the channels in a network are arranged into predetermined pairs, one channel of each such pair being

: 4 :  0145437

designated for call signals and the other channel for reply signals. Thus a station may have means to determine, from the results of the searching, any busy channels which have a paired channel free.

Preferably the network has the capability of interfacing with the public switched telephone system and other voice and/or data networks.

The transmission link connecting the stations within the network may be of any suitable form, for example it may be a transmission line (e.g. a cable of wire and/or optical fibre) or it may be by broadcast or a combination of both.

In one preferred method of operating the network, the following functions are effected in order for a station to call up another station:

(i)   the searching means of one station scans a number of channels to determine one having no signal;

(ii)  upon finding a free channel, the transmitting means of that station applies a carrier signal and a call-up signal with an identification code of the intended recipient station or stations;

(iii) the station(s) then monitors for a reply signal from the recipient station;

(iv)  upon finding a reply signal, the station(s) establishes voice contact.

In one preferred method of operating the network, when a station is not involved in the transmission and/or reception of signals, it remains prepared for call up by effecting the following functions:

(i)   the searching means scans the channels for one having a signal;

(ii)  upon finding a channel with a signal, the station inspects the identification code of the intended recipient station or stations for that signal;

(iii) if that code includes the code for the station, then the station establishes voice contact;

(iv) if that code does not include the code for the station, then the searching means resumes scanning of the channels.

Preferably the searching means identifies a channel as having a call-up signal by looking for a signal on the call channel but none on the associated reply channel.

In order that the invention may more readily be understood, a description is now given, by way of example only, reference being made to the accompanying drawing in which:

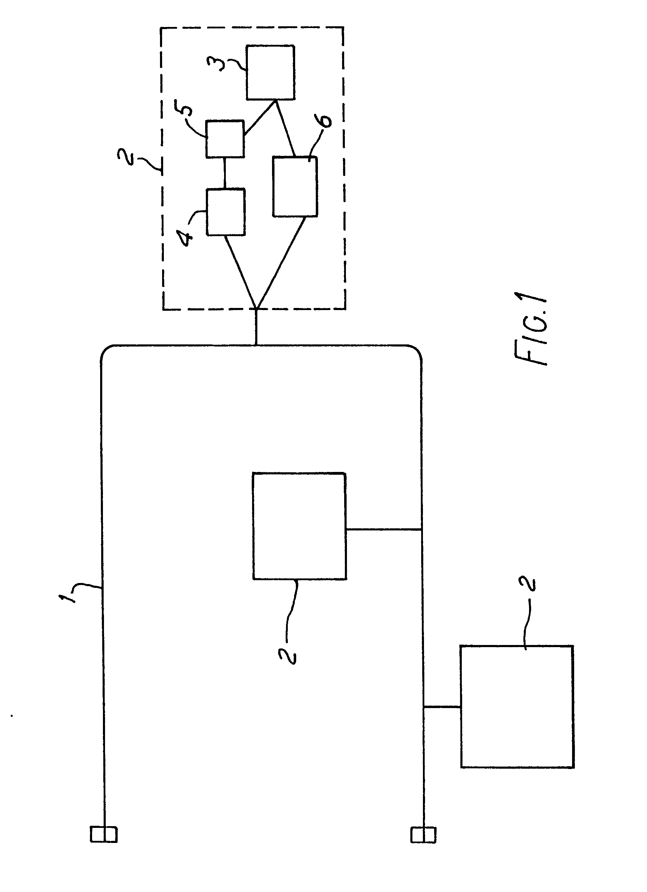

Figure 1 is a schematic drawing of an information transmission network embodying the present invention;

Figure 2 is a block diagram of a station in the network of Figure 1.

Figure 3 is a block diagram of a monitor station for use in a modification to the network of Figure 1; and

Figure 4 is a block diagram of a conference station for use in a modification to the network of Figure 1.

The illustrated information transmission network has a coaxial wire forming a multi-channel transmission line 1 to which are connected a number of separate stations 2, each incorporating a telephone 3 enabling a user to link with that of another station as required. Transmission line 1 is suitably terminated at its ends. Each station also has a channel scanner 4 to determine whether a signal is being transmitted on each available channel, a monitor 5 to inspect any detected signals for codes identifying the intended recipient station(s) and a transmitting section 6 to send out a signal with a code identifying the intended recipient. The available channels are split up into predetermined pairs for simultaneous connection between stations to enable two-way conversation.

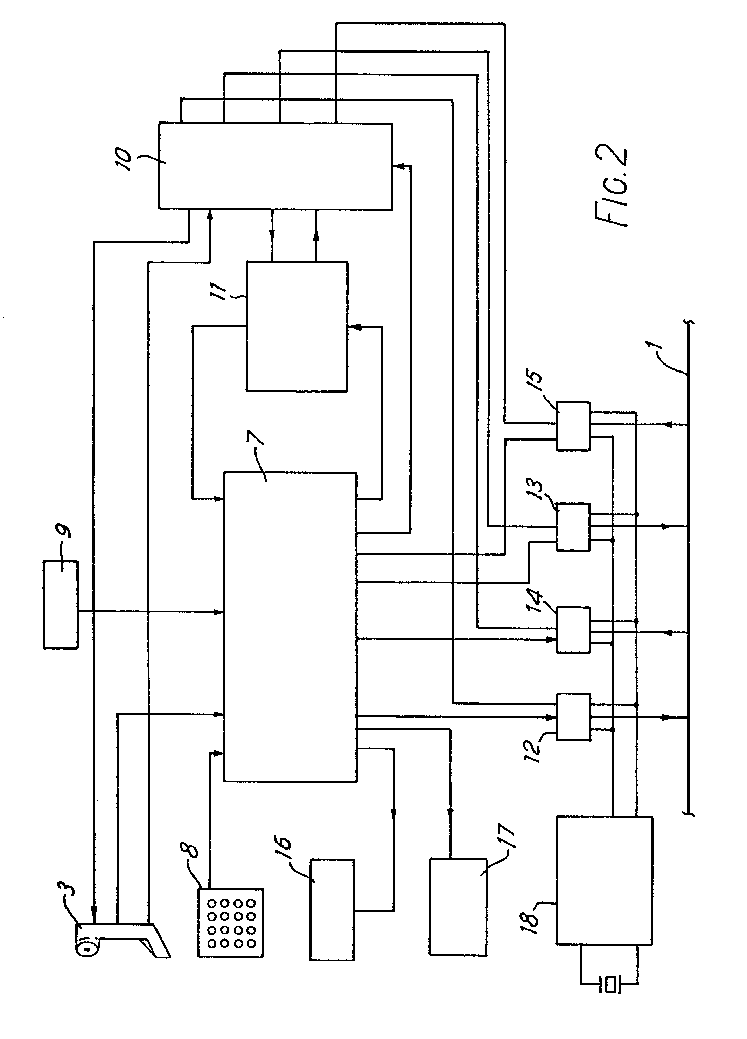

Figure 2 shows one station 2' in greater detail. Station 2' has a sequential logic device 7 which acts as a control operating on information derived from the user (e.g. via a key pad 8), or from a memory 9, or from transmission line 1 (via a signal switch or multiplexer 10 and serial data input/output device 11), or from any suitable combination of these sources.

Logic device 7 is capable of controlling the signal switch 10, the serial data device 11, and each of transmitters 12, 13 and receivers 14, 15 as well as operating a digital display 16 and audio alarm 17 for the user of the station.

In order to connect station 2' with another station in the network, the user at station 2' picks up the handset of telephone 3 thereby passing on a signal to logic device 7 which then instructs receiver 14 to start the scanning operation through the channels to find a free channel. In the first step of this scanning operation, the fixed frequency derived from a local oscillator 18 is modified by a value (specified by logic device 7) of a division factor N, the resultant frequency being used to tune receiver 14 to the channel corresponding to that frequency. Any data signal or carrier signal received on that channel is demodulated in receiver 14 before being passed onto signal processor 10 which then instructs logic device 7 (via serial data device 11) that a signal exists on that channel. Then by sending out a different value of division factor N, logic device 7 instructs receiver 14 to be tuned to another channel. This procedure is repeated until a channel containing no signals is found, whereupon the receiver 14 listens for a specified time to check that the channel is still free. Then logic device 7 instructs transmitter 12 to apply a carrier signal to that channel.

The receiver 14 continues monitoring the channel during the transmission of the signal in order to check whether there is collision with another signal; it also checks that the associated channel, reserved for a response signal, is not being blocked by a fault condition. If both tests are satisfactory, then the logic device 7 instructs a tone generator to give the user holding the handset a dialling tone indicating that he has now use of the channel.

The user can then dial, which results in the transmitter sending out a call-up signal which repeatedly includes the code for the dialled number together with a "type-of-message" code. Simultaneously, the logic device 7 instructs receiver 14 to monitor the associated return channel for any reply signal originating from the recipient station. The expected reply signal would be a message sequence to acknowledge the call and to say whether the recipient station is currently engaged or is idle. If a reply is not detected within the expected worst case time then an unobtainable tone is generated. If the user fails to start or finish dialling within the specified time limits then the warning tone will be generated and the user's transmitter will release the call half of the channel pair. The instrument will remain engaged to other callers until the handset is replaced.

If the status of the called telephone is idle, then upon receiving the call-up signal the telephone starts to ring (becoming engaged to other callers) and sends an acknowledgement signal to station 2'. Upon receiving this reply, logic device 7 effects a ringing tone at the handset of telephone 3 and prepares to make a link between telephone 3 of station 2' and the telephone of the called station once both handsets are raised. If either telephone senses loss of carrier signal from the other telephone, then it assumes that the call is finished and the station stops transmitting its carrier signal on the appropriate channel.

While the transmitter 12 and receiver 14 are occupied in providing the link between the two stations, receiver 15 is continually scanning the remaining channels for a call-up signal originating from a further station and intended for station 2'. If such a call-up signal is detected, logic device 7 activates display 16 and/or alarm 17 so that the user is aware of another caller waiting for a line. Logic device 7 also instructs transmitter 13 to send off an acknowledgement signal which may cause the said further station to generate an engaged tone.

When station 2' is not in communication with any other station, both receivers 14 and 15 are scanning, independently, the channels for a pair of channels on which there is a carrier on one channel and no answering carrier on the associated paired channel.    Any data signal found on a channel is demodulated in the receiver before being passed on to signal switch 10 and serial data device 11 which prepare it for input to logic device 7.    If the signal does not have a recipient identification code corresponding to station 2', then logic device 7 instructs that receiver to resume the scanning operation.    If it does have the appropriate recipient identification code, then a transmitter is instructed to send off an acknowledgement signal on the paired channel and preparation is made to establish telephone contact.

If only a carrier signal is found on such a channel, the receiver may wait an appropriate time interval before moving on to the next channel in case a data signal appears.

Throughout operation of the station 2', in each mode, all information on the current status of each channel is fed to memory 9, thereby aiding logic device 7 to choose an efficient order of channel scanning.    The memory 9 may also hold information on the current status of the various elements within station 2' to aid further the controlling operations effected by logic device 7.

The memory 9 can also be used to monitor channels quickly, for example in situations in which a watch must be maintained for call-up signals in case it transpires (after processing) that one merits urgent attention;  this is achieved by intermittently scanning quickly only those channels which are recorded in the memory 9 as being free (as a call-up signal would be more likely to be on a "previously free" channel). Also, the initial testing of a "previously-free" channel need only detect the presence or absence of a carrier signal in the call channel of a pair, and only if present then need there be a test on the answer channel.    If there is no such carrier signal on the answer channel, this indicates that the signal on the call channel is attempting to call-up a station, which may of course be station 2', and so it will be then necessary to investigate the recipient identification code of that signal.

In one search strategy for monitoring call-up signals, the available receivers search through all channels testing and recording the status of each as free, busy or half-busy (the latter referring to a carrier being only on the call channel of a pair of channels). The search is concentrated on selected channels, aimed at minimising the average time taken to find a call-up signal.

Any half-busy channel is examined to test whether it carries a call-up (paging) message relevant to the phone instrument in question; if it does then the call-up message will be answered as soon as possible.

A channel status table is used to estimate the a-priori probability of finding a call-up ('paging') message on each of the channels. A calling instrument chooses the call half of the lowest numbered free channel pair to transmit a paging message; thus it is advantageous to test the low numbered free channels most frequently. The initial testing of a previously free channel need only detect the presence of a carrier signal in the call half with no carrier on the return half of the channel pair, which should be a relatively quick test. If this is detected then a longer test for a relevant paging message is required.

In one example, the receiver search priorities (in order of descending frequency of searches) are:

(i) Channels which have half-busy status.

(ii) A few free channels nearest to the bottom of the band.

(iii) Low numbered busy channels.

(iv) Search of channels not covered above.

More than one free channel is searched in (ii) above because the channel status tables at each instrument will not be equally up to date, so that agreement on which channel is the lowest numbered free channel is not guaranteed.

The channel search is performed by two tasks: the 'free search' which checks only those channels logged as free in the channel status table, and the 'busy search' which checks only those logged as busy. These two tasks share the available receivers, but the free search has the higher priority. Both tasks update the channel status table and both detect half-busy channels (which should carry paging messages).

As the free search task checks only channels previously free, it can quickly detect the commonest situation of unchanged carrier status by first checking the forward half-channel. If this has no carrier then the channel is still free and the search proceeds to the next channel, but if there is a carrier on the forward half-channel then the return half-channel is checked. The channel is re-logged as busy or half-busy in the channel status table according to whether a carrier is now found on the return half-channel, and if half-busy then a message is posted to the incoming job task which must test for a message relevant to this instrument. If ten consecutive previously free channels are found to be still free then the free search restarts immediately at the first channel.

The busy search task deals quickly with the unchanged carrier status case by first checking the return half-channel and proceeding to the next channel if this has a carrier. If there is no carrier on the return half-channel then the forward half-channel is checked. The channel is re-logged as free or half-busy according to whether a carrier is now found on the forward half-channel, and if half-busy then a message is posted to the incoming job task which must test for a message relevant to this instrument. (The previous phone call on this channel must have finished and there is presumably now a new paging message.) The busy search tests all busy channels up to N and beyond N each busy channel is only tested occasionally (currently on every 4th pass).

Initialisation of the channel status table sets all channels as being free, and subsequent searching then modifies the table appropriately.

When the incoming job task has tested a half-busy channel for a message relevant to this instrument it logs the channel as either free or busy in the channel status table so that it will be checked again in due course by one of the search tasks.

Each transmitter and receiver may be used to send low speed (for example 1000 bits per second) signalling data traffic or

: 11 :

0145437

alternatively speech signals.

Because the transmitted signals are controlled by the stations 2, these signals can be processed quickly and flexibly and can utilize sophisticated facilities.

In a modification to the station 2', the functions of the logic device 7, the serial data device 11 and the memory 9 are effected by a microcomputer unit.

In another modification, the network is made more secure against surveillance or against third parties listening in to the conversation between stations, by providing facilities for "channel-hopping" after the link has been established. For example, throughout the conversation between stations, the pairs of channels used to maintain the link are changed randomly, with part of one of the transmission signals giving information on what changes are to be made. Additionally or alternatively there may be suitable voice coding or scrambling to make it more difficult for unwanted listeners.

A network embodying the present invention may be suitably interfaced with the public telephone network or with other private telephone networks.

In a network embodying the present invention, the absence of a central controller may make the network inherently robust and fault-tolerant.

A network embodying the present invention may incorporate features found at present in public and private telephone networks. For example, there may be a separate personal identification code for each user, distinct from the instrument identification code. The display device for a telephone at a station (e.g. device 16 at station 2') could then display the code for the called user and/or alarm 17 could give a distinctive ringing signal. The network may have the facility of easy re-allocation of a personal number to another station, thereby allowing a user to re-direct the calls for him to a new location. There could also be provision for a binding system whereby a password could prevent codes of a sensitive nature being re-allocated.

In a network embodying the present invention, the user at a station may be able to achieve many functions in place of an operator at a central exchange.   For example, the user may be able to manually transfer a call (once initial voice contact has been achieved).   Also he may be able to set up a conference call between a number of stations whereby a number of stations are linked successively to form a chain.

A network embodying the present invention may have the capacity to provide transmission of speech and data on different channels.   For example, co-axial cable systems used for cable television have a useable bandwidth of approximately 400 MHz, although this is halved when the spectrum is split into "up" and "down" bands in order to include booster amplifiers into the network.   These booster amplifiers are required only for relatively long lines, typically of the order of a kilometer. The effective bandwidth of a cable using booster amplifiers is therefore of the order of 200 MHz, and if analog voice modulation is used then a network which is able to handle 100 simultaneous conversations will use 2 MHz (i.e. 200 single channels spaced at 10 KHz), this being about 1% of the total bandwidth available.   The remaining uncommitted bandwidth can be used for expansion or for other information traffic (e.g. a standard broadband LAN, video, dedicated data links, etc.).   In this case the digital data is completely independent of the voice network except that they share a common transmission cable.   This means that the bandwidth of the data link(s) can be optimised independently of the voice bandwidth.

Alternatively the network can be made entirely digital in line with the move towards an ISDN (integrated services digital network) in the telecommunications field.   In this case the voice signals would be digitally encoded using standard (64 Kbit/s) format, and the channels would need to be spaced at wider frequency intervals;  however a 100 conversation exchange would leave more than 80% of the cable spectrum free for other uses.   Digital data signals can be sent down these voice channels, although the speed of transmission is limited by the voice bandwidth.

It is possible to combine these alternative approaches by sending voice and relatively low speed data along the telephone exchange part of the cable bandwidth, and supplementing this with independent high speed local data links using some of the remaining cable bandwidth.   The data sent in the telephone exchange band would be ISDN compatible, and could be routed through the public network to other sites when suitable digital connection standards (and public exchanges) are available.   The data sent independently at high speeds would normally be primarily local applications, but could link into other LANS using conventional "gateways".   This combined approach would give the maximum possible flexibility in providing data transmission services.

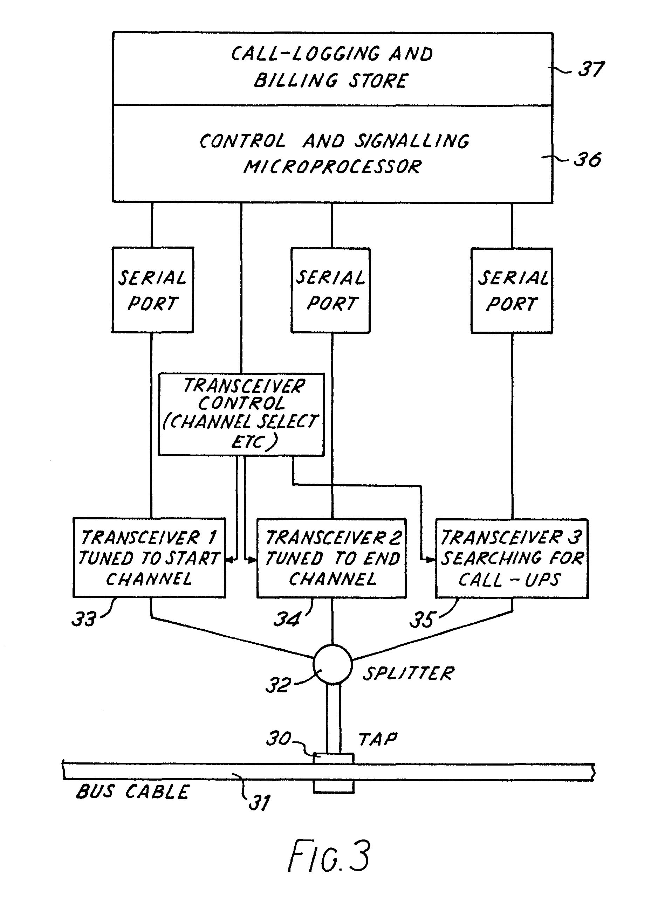

The network described above with reference to the drawings may be suitably modified such that each station 2 has only one transmitter and one receiver.   In one implementation to achieve this feature, the network has a monitor station which (i) maintains a record as to what stations are using what channels (ii) detects attempts to call a station which is already connected up to another station, and (iii) provides a busy tone or interrupts an existing connection between two stations.   The monitor station comprises (Figure 3) a tap 30 for bus cable 31, a signal splitter 32 and three transmitters/receivers 33, 34, 35, whose operations are controlled by a microprocessor unit 36; one transmitter/receiver may be tuned to the start channel, another the end channel and the remaining transmitter/receiver tuned to searching for call-ups.   The microprocessor unit 36 may also handle, or contribute to, the call-logging and billing operations, incorporating a suitable store 37 for this information.

In another implementation to achieve the feature of each station 2 having only one transmitter/receiver, while two (or more) stations are connected together and transferring information signals between them, each station incorporates periodically in the transmitted signal its identification code;

thus when another station wants to make a connection, it monitors the channels in the normal way but also, having determined which are in use, it can examine the signals transmitted from the connected stations looking for the identification corresponding to the station with which it wants to connect.

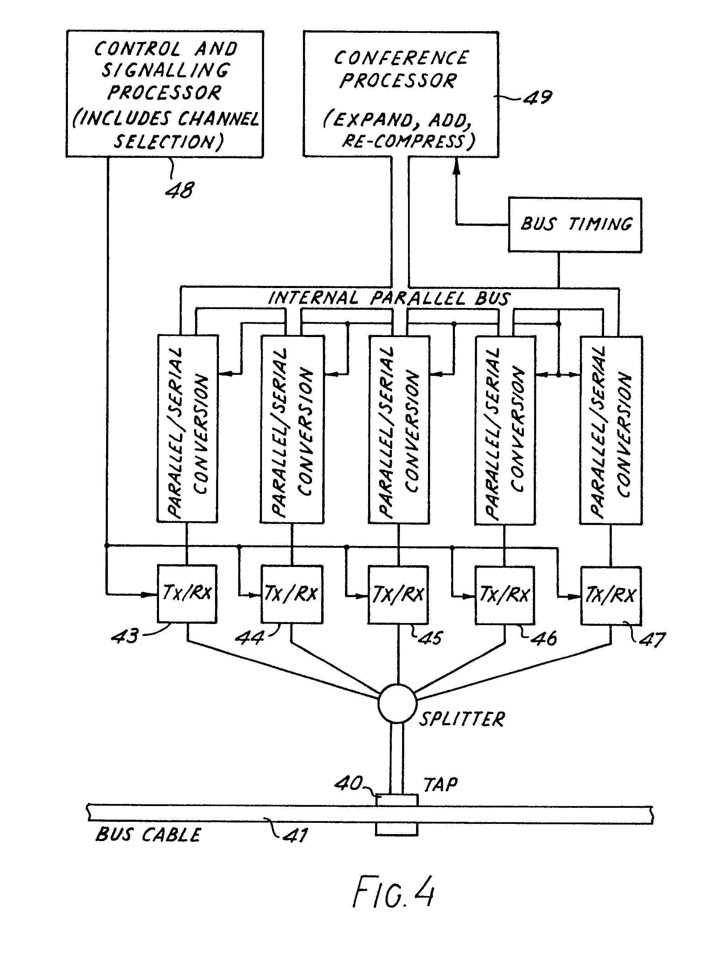

Any of the forms of network described above can be modified to have the ability of providing "conferencing", namely the simultaneous inter-connection of three or more stations.   In almost all of the proposed formats for the network, the conferencing facility cannot be achieved merely by connecting together a number of stations and allowing the separate voice signals to be added together simply.   For example, if voice transmission is in compounded binary form, two such signals cannot simply be added to give two or more conversations on the same line.   Thus, in order to have a conferencing facility, a network would require a conference station (see Figure 4) having a tap 40 for bus cable 41, a splitter 42, five transmitters/ receivers 43, 44, 45, 46, 47, a control and signalling microprocessor unit 48 to effect operation of the transmitters/ receivers, and a conference microprocessor unit 49 to process suitably the signals in and out of the transmitters/receivers. Thus, when there is to be a conference between five stations, each station is connected to a separate transmitter/receiver of the conference station, this being achieved with aid of unit 48.   Thereafter, any signals originating from the stations and reaching the respective transmitters/receivers 43 to 47 are passed onto unit 49 where they are de-compounded, added together and re-compounded to form a composite signal formed of the sum of the individual signals from the stations.   This composite signal is then passed from unit 49 to all of the transmitters/ receivers 43 to 47, all of which send it out on the respective channels to the stations.

If a network embodying the present invention is to be used for data transmission as well as voice transmission, then the channel-search procedure must be of such a form that a station needs only to monitor the voice-communication channels.

0145437

CLAIMS

1. An information transmission network having a plurality of stations connected by a transmission link to provide a plurality of separate channels for the routing of signals between the stations, along which transmission link, are passed, in use, signals with an identification code indicating the intended recipient(s), each station having means for regular automatic searching, throughout operation of the network, over a number of channels to determine if a signal exists in any of the channels.

2. An information transmission network according to Claim 1, comprising at least one station with means for continuous automatic searching throughout operation of the network, over a number of channels to determine if a signal exists in any of the channels.

3. An information transmission network according to Claim 1 or Claim 2, comprising at least one station with means to determine, from the results of the searching, any free channels.

4. An information transmission network according to any one of Claims 1 to 3 comprising at least one station with means to determine, from the results of the searching, any busy channels which have a paired channel presently free.

5. An information transmission network according to any one of Claims 1 to 4, comprising at least one station with means for monitoring any signal found by the searching means for an identification code indicating the intended recipient(s).

6. An information transmission network according to any one of Claims 1 to 5, comprising at least one station with means for storing information relating to the present status of one or more channels.

7. A station for an information transmission network comprising means for regular automatic searching over a number of channels to determine if a signal exists in any of the channels, and means for monitoring any signal found by the searching means for an identification code indicating the intended recipient(s).

FIG.1

0145437

FIG.2

FIG.3

CONTROL AND SIGNALLING PROCESSOR (INCLUDES CHANNEL SELECTION) 48

CONFERENCE PROCESSOR (EXPAND, ADD, RE-COMPRESS) 49

BUS TIMING

INTERNAL PARALLEL BUS

PARALLEL/SERIAL CONVERSION

PARALLEL/SERIAL CONVERSION

PARALLEL/SERIAL CONVERSION

PARALLEL/SERIAL CONVERSION

PARALLEL/SERIAL CONVERSION

Tx/Rx 43   Tx/Rx 44   Tx/Rx 45   Tx/Rx 46   Tx/Rx 47

SPLITTER

40   TAP

BUS CABLE 41

FIG.4